# EUROPÄISCHE PATENTSCHRIFT

(11) **EP 2 450 237 B1**
(45) Veröffentlichungstag und Bekanntmachung des Hinweises auf die Patenterteilung: **13.05.2015**
(21) Anmeldenummer: 11008678.2
(22) Anmeldetag: 28.10.2011
(51) Int. Cl.: B60Q 3/02, H05B 37/02, H05B 33/08

(54) **Schaltungsanordnung zum Betreiben einer Leuchtdiode**
Switch assembly for operating a light emitting diode
Agencement de commutation pour le fonctionnement d'une diode luminescente

(30) Priorität: 08.11.2010 DE 102010050747
(43) Veröffentlichungstag der Anmeldung: 09.05.2012
(73) Patentinhaber: Vishay Electronic GmbH, 95100 Selb (DE)
(72) Erfinder: Dinc, Mustafa, 74076 Heilbronn (DE); Pieper, Norbert, 95111 Selb (DE)
(74) Vertreter: Manitz, Finsterwald & Partner GbR

(56) Entgegenhaltungen:
- US-A1- 2009 021 955
- US-A1- 2009 051 506
- US-A1- 2009 245 344
- US-A1- 2010 052 536

## Beschreibung

Die Erfindung betrifft eine Schaltungsanordnung zum Betreiben von wenigstens einer Leuchtdiode, insbesondere für ein Kraftfahrzeug.

Der Fortschritt bei der Entwicklung von Leuchtdioden, insbesondere bei weißen Hochleistungs-Leuchtdioden, macht diese zunehmend auch für den Einsatz im Kraftfahrzeugbereich interessant, beispielsweise für Beleuchtungszwecke im Fahrzeuginnenraum oder außen am Fahrzeug. Da derartige Leuchtdioden einen konstanten Betriebsstrom benötigen, können diese nicht unmittelbar an das Bordnetz eines Kraftfahrzeugs angeschlossen werden, weil die Bordnetzspannung gewisse Schwankungen auf weist. Für den Betrieb von Leuchtdioden ist folglich eine Konstantstromquelle erforderlich, da sich andernfalls die Lebensdauer der Leuchtdioden erheblich verringert.

Zum Ein- und Ausschalten der Leuchtdioden ist ferner eine Verbindung zu entsprechenden Schaltorganen notwendig. Bei einer Kraftfahrzeug-Innenraumbeleuchtung erfolgt dies zum Beispiel über Türkontakte. Darüber hinaus ist es wünschenswert, die Innenraumbeleuchtung verzögert ein- oder ausschalten zu können oder die Helligkeit zu regeln.

Zur Realisierung dieser Anforderungen sind ein nicht unerheblicher Verkabelungsaufwand und der Einsatz von relativ aufwändigen Schaltungen zur Ansteuerung der Leuchtdioden notwendig.

Aus dem Dokument US 2009/0245344 A1 ist eine Schaltungsanordnung mit den Merkmalen des Oberbegriffs des Anspruchs 1 bekannt.

Das Dokument US 2009/0021955 A1 beschreibt ein Steuemetzwerk für LED-Schaltungsanordnungen, das auf Master/Slave-Knoten basiert. Das Dokument US 2009/0051506 A1 offenbart programmierbare LED-Schaltungsanordnungen. Bei beiden Dokumenten umfasst die jeweilige Schaltungsanordnung eine Kommunikationseinrichtung zum Empfang von Steuersignalen von einem Datenbus, eine Steuereinrichtung, einen Schaltregler zur Bereitstellung eines Betriebsstroms zum Betrieb der Leuchtdioden und einen Ansteuerschaltkreis zur Ansteuerung des Schaltreglers auf Grundlage der von der Kommunikationseinrichtung empfangenen Steuersignale.

Es ist die Aufgabe der Erfindung, eine Schaltungsanordnung der eingangs genannten Art anzugeben, welche einen vielseitigen Betrieb von Leuchtdioden, insbesondere in einem Kraftfahrzeug, ermöglicht und kostengünstig herzustellen ist.

Die Lösung der Aufgabe erfolgt durch eine Schaltungsanordnung mit den Merkmalen des Anspruchs 1.

Eine derartige Schaltungsanordnung dient zum Betreiben von wenigstens einer Leuchtdiode, insbesondere für ein Kraftfahrzeug. Eine derartige Schaltungsanordnung umfasst eine mit einem Datenbus verbindbare Kommunikationseinrichtung, welche zumindest zum Empfang von Steuersignalen von dem Datenbus ausgelegt ist, eine mit der Kommunikationseinrichtung verbundene Steuereinrichtung, und einen mit der Steuereinrichtung verbundenen Ansteuerschaltkreis zur getakteten Ansteuerung eines Schaltreglers, welcher zur Bereitstellung eines Betriebsstroms zum Betrieb der Leuchtdiode ausgelegt ist, wobei die Steuereinrichtung zur Ansteuerung des Ansteuerschaltkreises auf der Grundlage der von der Kommunikationseinrichtung empfangenen Steuersignale ausgelegt ist.

Die erfindungsgemäße Schaltungsanordnung ermöglicht es, auf einfache Weise eine oder mehrere Leuchtdioden mit einer Vielzahl von Betriebsarten anzusteuern. Die zum Betrieb der Leuchtdioden notwendige Versorgungsspannung wird beispielsweise vom Bordnetz des Kraftfahrzeugs bereitgestellt, während die Steuersignale zum Ansteuern der Leuchtdiode über den Datenbus übermittelt und von der Steuereinrichtung in entsprechende Ansteuersignale für den Schaltregler umgesetzt werden. Dadurch können Betätigungsbefehle von einer Vielzahl von an den Datenbus angeschlossenen Betätigungsorganen empfangen werden, ohne dass für jedes Betätigungsorgan eine separate Leitungsverbindung zur Schaltungsanordnung vorgesehen werden muss.

Ein derartiger Datenbus kann beispielsweise ein sogenannter LIN-Bus sein, wobei LIN für "Local Interconnect Network" steht. Ein derartiger LIN-Bus ist ein Eindraht-Bus, der eine Signalleitung und das Massepotential der Versorgungsspannung als Bezugspotential verwendet. Somit muss ein über den LIN-Bus ansteuerbares Gerät lediglich drei Anschlüsse aufweisen, nämlich für den Pluspol und den Minuspol bzw. das Massepotential der Versorgungsspannung sowie einen Anschluss für die Signalleitung des LIN-Busses. Steuersignale werden über den LIN-Bus mit einer relativ niedrigen Datenrate übertragen, wobei gebräuchliche Datenraten 2.400 Bits/s, 9.600 Bits/s und 19.200 Bits/s sind. Grundsätzlich lässt sich die erfindungsgemäße Schaltungsanordnung auch für andere Bustypen einsetzen, zum Beispiel einen CAN-Bus.

Die erfindungsgemäße Schaltungsanordnung ist nicht nur zur Ansteuerung einer einzelnen Leuchtdiode ausgelegt, vielmehr können damit auch sogenannte Leuchtdioden-Strings, also in Reihe angeordnete Leuchtdioden, oder Leuchtdioden-Arrays, also mehrere parallel geschaltete Reihen von Leuchtdioden, angesteuert werden.

Die Schaltungsanordnung kann zum Beispiel zur Ansteuerung von Leuchtdioden einer im Dachhimmel eines Kraftfahrzeugs integrierten Innenraumbeleuchtung, einer Türbeleuchtung oder einer Außenbeleuchtung verwendet werden. Bei geeigneter Ansteuerung über den Datenbus ist es möglich, beim Ein- und Ausschalten die Helligkeit der Leuchtdioden kontinuierlich zu erhöhen bzw. zu vermindern oder die Helligkeit der Beleuchtung durch den Benutzer oder automatisch, etwa in Abhängigkeit vom Umgebungslicht, zu verändern. Weiterhin kann der Benutzer zum Beispiel über einen Funkschlüssel Steuersignale an die erfindungsgemäße Schaltungsanordnung übermitteln, sodass diese die Leuchtdioden in einem Blinkmodus betreibt, damit der Benutzer sein abgestelltes Kraftfahrzeug auch im Dunklen leicht auffinden kann.

Gemäß einer vorteilhaften Ausführungsform der Erfindung umfasst die Schaltungsanordnung die Leuchtdiode. Die Leuchtdiode und die Schaltungsanordnung für ihren Betrieb bilden somit eine Einheit.

Bevorzugt ist, wenn die Schaltungsanordnung einen Temperatursensor zur Ermittlung der Temperatur der Leuchtdiode aufweist und die Steuereinrichtung ferner zur Ansteuerung des Ansteuerschaltkreises auf der Grundlage der Temperatur der Leuchtdiode ausgelegt ist. Da die Lebensdauer von Leuchtdioden, insbesondere Hochleistungs-Leuchtdioden, bei zu hoher Betriebstemperatur stark abnimmt, ermöglicht es die temperaturabhängige Ansteuerung des Ansteuerschaltkreises, den Betriebsstrom der Leuchtdiode so zu regeln, dass die Leuchtdiode stets unterhalb einer maximal zulässigen Betriebstemperatur betrieben wird.

Bevorzugt weist die Schaltungsanordnung hierzu einen thermisch mit der Leuchtdiode gekoppelten Temperatursensor auf. Dieser Temperatursensor kann insbesondere eine Diode eines mit der Schaltungsanordnung gekoppelten Schaltreglers sein, welche räumlich in der Nähe der Leuchtdiode angeordnet wird. Da die Vorwärtsspannung einer Diode von ihrer Betriebstemperatur abhängt, kann diese Vorwärtsspannung überwacht und der Betriebsstrom zum Betrieb der Leuchtdiode auf der Grundlage der Vorwärtsspannung geregelt werden.

Die Schaltungsanordnung umfasst den Schaltregler. Der Schaltregler ist bevorzugt ein Gleichspannungswandler, beispielsweise ein Aufwärtswandler, ein Abwärtswandler oder eine auch als SEPIC-Wandler bezeichnete Kombination aus Aufwärtswandler und Abwärtswandler. Insbesondere die Verwendung eines SEPIC-Wandlers ermöglicht eine flexible Anpassung an die Anzahl der in Reihe geschalteten Leuchtdioden bzw. an die Höhe der zur Verfügung stehenden Versorgungsspannung. Ein zum Betrieb des Schaltreglers erforderlicher elektronischer Schalter kann sowohl in dem Ansteuerschaltkreis integriert als auch als externes Bauelement vorgesehen sein. -

Ferner sind zumindest die Kommunikationseinrichtung, die Steuereinrichtung und zusätzlich auch der Ansteuerschaltkreis in einem gemeinsamen integrierten Schaltkreis integriert. Ein derartiger integrierter Schaltkreis ist zum Beispiel ein Halbleiter-Chip auf Basis eines Siliziumträgersubstrats. Die Kommunikationseinrichtung, die Steuereinrichtung und auch der Ansteuerschaltkreis sind somit in einem einzigen Halbleiter-Chip integriert, sodass sich dadurch der benötigte Bauraum noch weiter verringert.

Der Schaltregler weist mehrere Bauelemente auf, welche wenigstens eine Induktivität, wenigstens eine Kapazität, wenigstens eine Diode, insbesondere Schottky-Diode, und wenigstens einen Widerstand umfassen, wobei diese Bauelemente auf dem Substrat angeordnet sind. Durch die Integration einzelner oder aller Bauelemente des Schaltreglers auf dem Substrat lässt sich eine noch kompaktere Bauweise der Schaltungsanordnung realisieren.

Vorzugsweise sind die Leuchtdiode und bevorzugt auch der Temperatursensor auf dem Substrat angeordnet. Es ist möglich, einen die Leuchtdiode bildenden Halbleiter-Chip auf dem Substrat anzuordnen bzw. die Leuchtdiode sogar auf dem gemeinsamen integrierten Schaltkreis anzuordnen. Dies gilt entsprechend auch für den Temperatursensor, insbesondere für eine gleichzeitig als Temperatursensor dienende Diode des Schaltreglers.

Gemäß einer bevorzugten Ausführungsform ist die Steuereinrichtung ein Mikrocontroller, welcher insbesondere mittels von der Kommunikationseinrichtung von dem Datenbus empfangener Programmiersignale programmierbar ist. So ist es beispielsweise möglich, individuelle Zeitintervalle für die eingangs erwähnten Dimmvorgänge oder die Blinkfrequenz in dem Mikrocontroller zu hinterlegen. Insbesondere kann dies zu einem beliebigen Zeitpunkt erfolgen, indem entsprechende Programmiersignale über den Datenbus an die Schaltungsanordnung gesendet werden. Somit kann auch nach erfolgtem Einbau der Schaltungsanordnung in ein Kraftfahrzeug die Änderung von Betriebsparametern der Schaltungsanordnung erfolgen.

Vorzugsweise ist die Kommunikationseinrichtung ein Transceiver, welcher zum Empfang und zur Aussendung von Steuersignalen von dem und an den Datenbus ausgelegt ist. Dadurch kann die Auswerteschaltung nicht nur Steuersignale vom Datenbus empfangen, sondern auch Signale an den Datenbus aussenden. So ist es zum Beispiel möglich, Fehlermeldungen an den Datenbus zu übermitteln, beispielsweise beim Ausfall einzelner Leuchtdioden oder anderer Fehlfunktionen der Schaltungsanordnung.

Bevorzugt ist die Leuchtdiode in ein zwischen mehreren Bedienpositionen verstellbares Bedienelement, insbesondere Schalter, integriert, wobei die von der Kommunikationseinrichtung empfangenen Steuersignale ein Positionssignal umfassen, welches der aktuellen Bedienposition des Bedienelements entspricht, und wobei die Steuereinrichtung ferner zur Ansteuerung des Ansteuerschaltkreises auf der Grundlage des Positionssignals ausgelegt ist. Die Leuchtdiode kann also beispielsweise als Hintergrundbeleuchtung in einen Schalter integriert sein, wobei die Bedienposition (Stellung des Schalters) an den Datenbus übermittelt wird und über die Kommunikationseinrichtung von der Schaltungsanordnung erfasst wird. So kann die erfindungsgemäße Schaltungsanordnung dazu verwendet werden, dem Benutzer auf der Grundlage der Bedienposition eines Schalters den aktuellen Schaltzustand einer durch diesen Schalter betätigten Einrichtung des Fahrzeugs, z.B. eines Scheibenwischers, zu signalisieren. Die Schaltungsanordnung muss hierfür lediglich das am Datenbus ohnehin anliegende Steuersignal des Schalters auswerten. Unter Bedienposition ist nicht nur eine mechanische Position eines als Schalter ausgebildeten Bedienelements zu verstehen, sondern allgemein ein durch das Bedienelement herbeigeführter Schaltzustand, der über ein beispielsweise als Taster ausgebildetes Bedienelement verändert werden kann. Weiterhin kann die Bedienposition auch den momentanen Widerstandswert eines Potentiometers, z.B. eines Dimmpotentiometers einer Instrumentenbeleuchtung, umfassen.

Gemäß einer bevorzugten Ausführungsform umfassen die von der Kommunikationseinrichtung empfangenen Steuersignale ein Umgebungslichtsignal und die Steuereinrichtung ist ferner zur Ansteuerung des Ansteuerschaltkreises auf der Grundlage des Umgebungslichtsignals ausgelegt. Das Umgebungslichtsignal kann beispielsweise von einem Umgebungslichtsensor bereitgestellt werden, welcher mit dem Datenbus gekoppelt ist, so dass zum Beispiel die Helligkeit der Beleuchtung -wie vorstehend bereits erwähnt - in Abhängigkeit vom Umgebungslicht gesteuert werden kann. Weiterhin kann zum Beispiel eine als Innenraumbeleuchtung ausgestaltete Schaltungsanordnung, welche mittels eines mit dem Datenbus gekoppelten Türkontakts bei einem Öffnen einer Fahrzeugtür angesteuert wird, nur dann aktiviert werden, wenn das Umgebungslicht einen bestimmten stimmten Schwellenwert unterschreitet, ohne dass für diese Funktionalität ein zusätzliches Steuergerät benötigt wird.

Weitere vorteilhafte Ausführungsformen der Erfindung sind in den Unteransprüchen, der Beschreibung und den Zeichnungen angegeben.

Die Erfindung wird nachfolgend anhand von Ausführungsbeispielen mit Bezug auf die Zeichnungen beschrieben. Es zeigen:
- Fig. 1: einen Schaltplan einer erfindungsgemäße Schaltungsanordnung gemäß einem ersten Ausführungsbeispiel,
- Fig. 2: einen Schaltplan einer erfindungsgemäße Schaltungsanordnung (gestrichelt dargestellte Variante) gemäß einem zweiten Ausführungsbeispiel, und
- Fig. 3: eine perspektivische Ansicht einer in ein Gehäuse integrierten erfindungsgemäßen Schaltungsanordnung.

Eine erfindungsgemäße Schaltungsanordnung 10 umfasst ein Substrat 40, beispielsweise ein einlagiges oder mehrlagiges Dünnfilmsubstrat, auf dem ein integrierter Schaltkreis IC sowie mehrere noch näher zu erläuternde diskrete Bauelemente angeordnet sind. Die Schaltungsanordnung 10 weist einen Anschluss VB für eine Betriebsspannung, beispielsweise eine 12 V-Spannung eines Kraftfahrzeugbordnetzes, einen Anschluss GND für eine gemeinsame Masse und einen Anschluss LIN für eine LIN-Signalleitung eines LIN-Busses auf.

Ein an dem Anschluss LIN empfangenes Steuersignal wird von einem LIN-Transceiver 12 über einen UART-Schnittstellenbaustein 14 an einen Mikrocontroller 16 übertragen. Die Verbindung zwischen dem LIN-Transceiver 12 und dem Mikrocontroller 16 ist bidirektional, d.h. es können auch Signale vom Mikrocontroller 16 an den LIN-Bus ausgesendet werden, beispielsweise Fehlermeldungen.

Eine Spannungsversorgung 18 versorgt den Mikrocontroller 16 sowie weitere Schaltkreise der Schaltungsanordnung 10 mit einer stabilisierten Versorgungsspannung.

Der Mikrocontroller 16 erzeugt auf der Grundlage der vom LIN-Bus empfangenen Steuersignale ein pulsweitenmoduliertes Steuersignal oder PWM-Steuersignal und übermittelt dieses über eine PWM-Steuersignalleitung 28 an einen Schaltregler-Treiber 20. Die Modulationsfrequenz beträgt bevorzugt mehr als 200 Hz. Der Schaltregler-Treiber 20 erzeugt auf der Grundlage des PWM-Steuersignals ein hochfrequentes getaktetes Ansteuersignal, mit dem ein MOS-Transistor M1 eines an sich bekannten, als Abwärtswandler ausgestalteten Schaltreglers über einen Verstärker V1 angesteuert wird. Die Frequenz des getaktetes Ansteuersignals beträgt bis zu 2 MHz.

Der Schaltregler umfasst eine Induktivität L, zwei Kapazitäten C1, C2 und eine Schottky-Diode SD. Die den Schaltregler bildenden Bauelemente können beispielsweise in Form von SMD-Bauelementen auf das Substrat 40 geklebt oder gelötet werden.

Der Schaltregler wandelt eine Betriebsspannung in einen Betriebsstrom um, welcher durch zwei in Reihe geschaltete Leuchtdioden LED1, LED2 fließt. Der Betriebsstrom fließt ferner über einen Shunt-Widerstand R und erzeugt dort einen Spannungsabfall. In einem Operationsverstärker OP wird ein Differenzsignal aus der über R1 gemessenen Spannung und einer Referenzspannung VREF erzeugt und an einem Eingang des Schaltregler-Treibers 20 zur Regelung des Betriebsstroms auf einen vorgegebenen Sollwert zur Verfügung gestellt. Mit der Schaltungsanordnung 10 können Betriebsströme bis zu 1 A bereitgestellt werden.

Ein Oszillator 22 versorgt sowohl den Mikrocontroller 16 als auch den Schaltregler-Treiber 20 mit einer Systemtaktfrequenz.

Die Vorwärtsspannung der Schottky-Diode SD ist ein Maß für ihre Temperatur, sodass bei einer räumlichen Anordnung, die eine thermische Kopplung der Schottky-Diode SD mit den Leuchtdioden LED1, LED2 gewährleistet, eine Regelung des Betriebsstroms der Leuchtdioden LED1, LED2 in Abhängigkeit von der Temperatur erfolgen kann. Die Schottky-Diode SD weist einen positiven Temperaturkoeffizienten auf, d.h. das Ansteigen der Vorwärtsspannung signalisiert ein Ansteigen der Betriebstemperatur der Leuchtdioden LED1, LED2.

Zur Messung der Vorwärtsspannung der Schottky-Diode SD und für die nachfolgende Digitalisierung des Messwerts weist der integrierte Schaltkreis IC einen Multiplexer 26 und einen diesem nachgeordneten Analog-Digital-Wandler 24 auf. Der digitalisierte Messwert wird an den Mikrocontroller 16 übermittelt. Falls die Betriebstemperatur einen vorgegebenen Grenzwert übersteigt, ändert der Mikrocontroller 16 das PWM-Steuersignal derart, dass der Schaltregler-Treiber 20 den Betriebsstrom so weit vermindert, dass die Temperatur der Leuchtdioden LED1, LED2 wieder unter den Grenzwerts fällt.

Auf dem Substrat 40 kann eine Maske (nicht dargestellt) vorgesehen werden, welche alle Komponenten bis auf die Leuchtdioden LED1, LED2 abdeckt.

Die Leuchtdioden LED1, LED2 können beispielsweise als Innenraumbeleuchtung für ein Kraftfahrzeug dienen. Für diese Anwendung werden nachfolgend einige rein beispielhafte Betriebsabläufe der Schaltungsanordnung 10 beschrieben.

Empfängt die Schaltungsanordnung 10 ein Steuersignal am Anschluss LIN, welches ein Einschalten der Innenraumbeleuchtung anfordert, so steuert der Mikrocontroller 16 den Schaltregler-Treiber 20 derart an, dass sich der Betriebsstrom innerhalb eines im Mikrocontroller 16 vorgegebenen Zeitintervalls kontinuierlich erhöht, bis ein wiederum im Mikrocontroller 16 hinterlegter maximaler Betriebsstrom erreicht ist. Umgekehrt erfolgt beim Eintreffen eines Steuersignals zum Ausschalten der Beleuchtung am Anschluss LIN ein kontinuierliches Reduzieren oder Abregeln des Betriebsstroms auf Null. Ferner kann der Mikrocontroller 16 so programmiert werden, dass das Ausschalten bzw. das kontinuierliche Abregeln der Leuchtdioden LED 1, LED2 erst nach Ablauf einer vorgebbaren Verzögerungszeit erfolgt.

Bei einer vorteilhaften Ausgestaltung kann die Schaltungsanordnung 10 am Anschluss LIN zusätzlich ein Umgebungslichtsignal eines mit dem LIN-Bus gekoppelten Umgebungslichtsensors (nicht dargestellt) empfangen, welches ein Maß für das Umgebungslicht ist. Bei dieser Ausgestaltung erfolgt das Einschalten der Innenraumbeleuchtung nur dann, wenn das Umgebungslicht einen bestimmten Schwellenwert unterschreitet, so dass also die Innenraumbeleuchtung nur bei Dunkelheit aktiviert wird.

Über den LIN-Bus können ferner Programmiersignale übermittelt werden, über die zum Beispiel die Dauer des Zeitintervalls für den Ein- und Ausschaltvorgang oder die Höhe des Betriebsstroms zur Einstellung einer gewünschten Helligkeit geändert werden kann. Dies ermöglicht eine höchst komfortable und flexible benutzerspezifische Anpassung der Betriebsmodi der Innenraumbeleuchtung.

Weiterhin kann die Schaltungsanordnung 10 als Instrumentenbeleuchtung für ein Armaturenbrett eines Fahrzeugs verwendet werden. Bei dieser Anwendung kann das vorstehend erwähnte Umgebungslichtsignal zur Steuerung der Helligkeit der Instrumentenbeleuchtung verwendet werden, so dass z.B. bei zunehmender Umgebungshelligkeit die Helligkeit der Instrumentenbeleuchtung erhöht wird, um stets einen optimalen Kontrast zu gewährleisten.

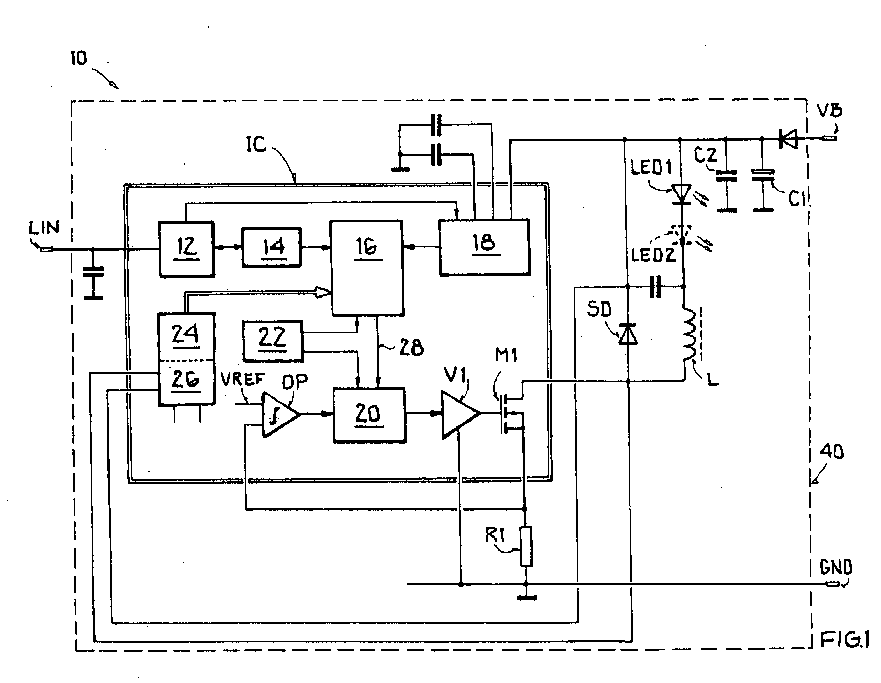

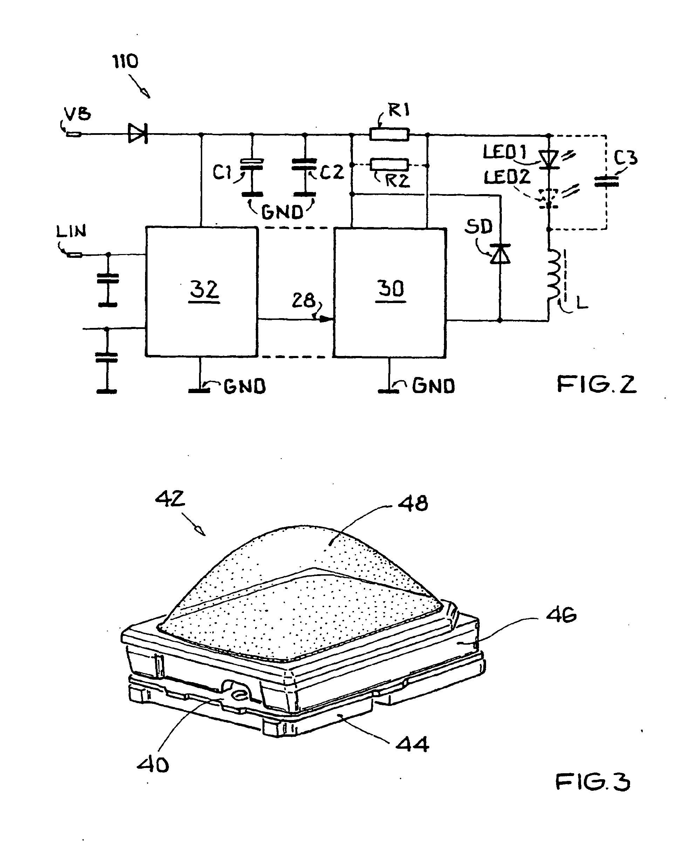

Fig. 2 zeigt eine gegenüber der Schaltungsanordnung 10 von Fig. 1 abgewandelte Schaltungsanordnung 110, welche jedoch in ihrer Funktionsweise der Schaltungsanordnung 10 von Fig. 1 entspricht. Insofern weisen Elemente mit gleichen Bezugszeichen auch die gleiche Funktionalität auf.

Im Unterschied zu der Schaltungsanordnung 10 weist der Schaltregler der Schaltungsanordnung 110 von Fig. 2 optional einen weiteren, zu dem Shunt-Widerstand R1 parallel geschalteten Shunt-Widerstand R2 auf. Ferner ist optional eine weitere Kapazität C3 parallel zu den Leuchtdioden LED1, LED2 geschaltet. Damit kann eine bessere Anpassung an die gewünschten Betriebsparameter des Schaltreglers erreicht werden. Ferner ist bei der Schaltungsanordnung 110 keine Temperaturüberwachung der Leuchtdioden LED1, LED2 vorgesehen. Diese kann jedoch optional durch Überwachung der Vorwärtsspannung der Schottky-Diode SD entsprechend der Schaltungsanordnung 10 von Fig. 1 oder mittels eines separaten Temperatursensors erfolgen.

Anstelle eines einzigen integrierten Schaltkreises IC weist die Schaltungsanordnung 110 einen Ansteuerschaltkreis 30 und einen weiteren Schaltkreis 32 auf (keine Ausführungsform der Erfindung).

Im Ansteuerschaltkreis 30 sind diejenigen Bauelemente und Schaltkreise integriert, welche dem Schaltregler-Treiber 20, dem Operationsverstärker OP, dem Verstärker V1 und dem MOS-Transistor M1 von Fig. 1 entsprechen.

Im Schaltkreis 32 sind diejenigen Bauelemente und/oder Schaltkreise integriert, welche dem LIN-Transceiver 12, dem UART-Schnittstellenbaustein 14, dem Mikrocontroller 16, der Spannungsversorgung 18, dem Analog-Digital-Wandler 24 und dem Multiplexer 26 von Fig. 1 entsprechen. Ein PWM-Steuersignal wird über die PWM-Steuersignalleitung 28 von dem Schaltkreis 32 an den Ansteuerschaltkreis 30 übermittelt. Ein Oszillator ist in Fig. 2 nicht dargestellt, kann jedoch als externes Bauelement oder in einem oder beiden Schaltkreisen 30, 32 vorgesehen sein.

Erfindungsgemäß können die beiden Schaltkreise 30, 32 auch in einem einzigen Schaltkreis integriert werden, was durch gestrichelte Linien angedeutet ist.

Bei beiden Schaltungsanordnungen 10, 110 sind die Induktivität L, die Kapazitäten C1 bis C3, die Shunt-Widerstände R1, R2, die Schottky-Diode SD sowie die Leuchtdioden LED1, LED2 als diskrete Bauelemente vorgesehen.

Ein beispielhaftes Beleuchtungselement 42 ist in Fig. 3 dargestellt. Dieses umfasst eine Trägerplatte 44, auf der ein Substrat 40 mit einer Schaltungsanordnung 10 oder 110 gemäß Fig. 1 bzw. Fig. 2 angeordnet ist. Auf der der Trägerplatte 44 gegenüberliegenden Seite des Substrats 40 ist ein Rahmen 46 angeordnet, welcher die auf dem Substrat 40 angeordneten Bauelemente (nicht sichtbar) umgibt. Die Leuchtdioden sind dabei so angeordnet, dass diese ungehindert Licht in Zeichnungsrichtung nach oben abstrahlen können.

Das Innere des Rahmens 46 ist mit einer transparenten Vergussmasse 48 ausgegossen, wobei die Vergussmasse 48 einen konvexen Meniskus ausbildet. Dieser sorgt für eine divergente Abstrahlung des von den Leuchtdioden erzeugten Lichts.

### Bezugszeichenliste

- 10, 110: Schaltungsanordnung
- 12: LIN-Transceiver
- 14: UART-Schnittstellenbaustein
- 16: Mikrocontroller
- 18: Spannungsversorgung
- 20: Schaltregler-Treiber
- 22: Oszillator
- 24: Analog-Digital-Wandler
- 26: Multiplexer
- 28: PWM-Steuersignalleitung
- 30: Ansteuerschaltkreis
- 32: Schaltkreis
- 40: Substrat
- 42: Beleuchtungselement
- 44: Trägerplatte
- 46: Rahmen
- 48: Vergussmasse

- VB: Anschluss für Betriebsspannung
- GND: Anschluss für Massepotential
- LIN: Anschluss für LIN-Signalleitung
- IC: integrierter Schaltkreis
- LED 1, LED2: Leuchtdiode
- L: Induktivität
- C1- C3: Kapazität
- SD: Schottky-Diode
- R1, R2: Shunt-Widerstand
- OP: Operationsverstärker
- M1: MOS-Transistor
- V1: Verstärker
- VREF: Referenzspannung

## Patentansprüche

1. Schaltungsanordnung zum Betreiben von wenigstens einer Leuchtdiode (LED1, LED2), insbesondere für ein Kraftfahrzeug, mit einer mit einem Datenbus verbindbaren Kommunikationseinrichtung (12, 14), welche zumindest zum Empfang von Steuersignalen von dem Datenbus ausgelegt ist,
einer mit der Kommunikationseinrichtung (12, 14) verbundenen Steuereinrichtung (16),
einem Schaltregler, welcher zur Bereitstellung eines Betriebsstroms zum Betrieb der Leuchtdiode (LED1, LED2) ausgelegt ist, und einem mit der Steuereinrichtung (16, 32) verbundenen Ansteuerschaltkreis (20, 30) zur getakteten Ansteuerung des Schaltreglers, wobei die Steuereinrichtung (16, 32) zur Ansteuerung des Ansteuerschaltkreises (20, 30) auf der Grundlage der von der Kommunikationseinrichtung (12, 14) empfangenen Steuersignale ausgelegt ist; wobei die Kommunikationseinrichtung (12, 14), die Steuereinrichtung (16, 32) und der Ansteuerschaltkreis (20, 30) in einem gemeinsamen integrierten Schaltkreis (IC) integriert sind,
**dadurch gekennzeichnet,**
**dass** der Schaltregler mehrere diskrete Bauelemente aufweist, welche wenigstens eine Induktivität (L), wenigstens eine Kapazität (C1 - C3), wenigstens eine Diode (SD) und wenigstens einen Widerstand (R1, R2) umfassen, und
**dass** die Schaltungsanordnung (10, 110) ein Substrat (40) aufweist, auf dem sowohl der integrierte Schaltkreis (IC) als auch die diskreten Bauelemente (L; C1 - C3; SD; R1, R2) des Schaltreglers gemeinsam angeordnet sind.

2. Schaltungsanordnung nach Anspruch 1,
**dadurch gekennzeichnet,**
**dass** der Datenbus ein LIN-Bus ist.

3. Schaltungsanordnung nach Anspruch 1 oder 2,
**dadurch gekennzeichnet,**
**dass** die Schaltungsanordnung (10, 110) die Leuchtdiode (LED1, LED2) umfasst.

4. Schaltungsanordnung nach Anspruch 3,
**dadurch gekennzeichnet,**
**dass** die Schaltungsanordnung (10, 110) zur Ermittlung der Temperatur der Leuchtdiode (LED1, LED2) ausgelegt ist und die Steuereinrichtung (16, 32) ferner zur Ansteuerung des Ansteuerschaltkreises (20, 30) auf der Grundlage der Temperatur der Leuchtdiode (LED1, LED2) ausgelegt ist.

5. Schaltungsanordnung nach Anspruch 4,
**dadurch gekennzeichnet,**
**dass** die Schaltungsanordnung (10, 110) einen thermisch mit der Leuchtdiode (LED1, LED2) gekoppelten Temperatursensor aufweist, wobei der Temperatursensor eine Schottky-Diode (SD) aufweist, deren Vorwärtsspannung die Betriebstemperatur der Schottky-Diode repräsentiert, und wobei die Schottky-Diode ein Teil des Schaltreglers ist.

6. Schaltungsanordnung nach einem der vorhergehenden Ansprüche,
**dadurch gekennzeichnet,**
**dass** ein zum Betrieb des Schaltreglers erforderlicher elektronischer Schalter (M1) in dem Ansteuerschaltkreis (30) integriert oder als externes Bauelement vorgesehen ist.

7. Schaltungsanordnung nach einem der vorhergehenden Ansprüche,
**dadurch gekennzeichnet,**
**dass** der Schaltregler ein Gleichspannungswandler ist.

8. Schaltungsanordnung nach einem der vorhergehenden Ansprüche,
**dadurch gekennzeichnet,**
**dass** das Substrat (40) ein Dünnfilmsubstrat ist.

9. Schaltungsanordnung nach einem der vorhergehenden Ansprüche,
**dadurch gekennzeichnet,**
**dass** die wenigstens eine Diode des Schaltreglers eine Schottky-Diode (SD) umfasst.

10. Schaltungsanordnung nach Ansprüche 1 oder 2,
**dadurch gekennzeichnet,**
**dass** die Schaltungsanordnung (10, 110) die Leuchtdiode (LED1, LED2) umfasst, wobei die Schaltungsanordnung (10, 110) zur Ermittlung der Temperatur der Leuchtdiode (LED 1, LED2) ausgelegt ist und die Steuereinrichtung (16, 32) ferner zur Ansteuerung des Ansteuerschaltkreises (20, 30) auf der Grundlage der Temperatur der Leuchtdiode (LED 1, LED2) ausgelegt ist, wobei die Schaltungsanordnung (10, 110) einen thermisch mit der Leuchtdiode (LED1, LED2) gekoppelten Temperatursensor aufweist, wobei die Diode des Schaltreglers eine Schottky-Diode (SD) ist und gleichzeitig als Temperatursensor dient, deren Vorwärtsspannung die Betriebstemperatur der Schottky-Diode repräsentiert; und
**dass** die Leuchtdiode (LED 1, LED2) und auch der Temperatursensor auf dem Substrat (40) angeordnet sind.

11. Schaltungsanordnung nach einem der vorhergehenden Ansprüche,
**dadurch gekennzeichnet,**
**dass** die Steuereinrichtung ein Mikrocontroller (16, 32) ist, welcher mittels von der Kommunikationseinrichtung (12, 14) von dem Datenbus empfangener Programmiersignale programmierbar ist, um auch nach erfolgtem Einbau der Schaltungsanordnung in ein Kraftfahrzeug Betriebsparameter der Schaltungsanordnung ändern zu können.

12. Schaltungsanordnung nach einem der vorhergehenden Ansprüche,
**dadurch gekennzeichnet,**
**dass** die Kommunikationseinrichtung (12, 14) einen Transceiver (12) umfasst, welcher zum Empfang und zur Ausendung von Steuersignalen von dem und an den Datenbus ausgelegt ist.

13. Schaltungsanordnung nach einem der vorhergehenden Ansprüche,
**dadurch gekennzeichnet,**
**dass** die Leuchtdiode (LED1, LED2) in ein zwischen mehreren Bedienpositionen verstellbares Bedienelement, insbesondere in einen Schalter, integriert ist,
**dass** die von der Kommunikationseinrichtung (12, 14) empfangenen Steuersignale ein Positionssignal umfassen, welches der aktuellen Bedienposition des Bedienelements entspricht, und
**dass** die Steuereinrichtung (16, 32) ferner zur Ansteuerung des Ansteuerschaltkreises (20, 30) auf der Grundlage des Positionssignals ausgelegt ist.

14. Schaltungsanordnung nach einem der vorhergehenden Ansprüche,
**dadurch gekennzeichnet,**
**dass** die von der Kommunikationseinrichtung (12, 14) empfangenen Steuersignale ein Umgebungslichtsignal umfassen, und
**dass** die Steuereinrichtung (16, 32) ferner zur Ansteuerung des Ansteuerschaltkreises (20, 30) auf der Grundlage des Umgebungslichtsignals ausgelegt ist.

15. Schaltungsanordnung nach einem der vorhergehenden Ansprüche,
**dadurch gekennzeichnet,**
**dass** die Schaltungsanordnung (10) einen Anschluss (VB) für eine Betriebsspannung, einen Anschluss (GND) für eine gemeinsame Masse und einen Anschluss (LIN) für eine LIN-Signalleitung eines LIN-Busses aufweist.

## Claims

1. A circuit arrangement for operating at least one light emitting diode (LED1, LED2), in particular for a motor vehicle, comprising a communications device (12, 14) which is connectable to a data bus and which is configured at least for receiving control signals from the data bus;
a control device (16) connected to the communications device (12, 14);
a switching regulator which is configured for providing an operating current for operating the light emitting diode (LED1, LED2); and
a control circuit (20, 30) connected to the control device (16, 32) for the clocked control of the switching regulator,
wherein the control circuit (16, 32) is configured for the control of the control circuit (20, 30) on the basis of the control signals received by the communications device (12, 14); and
wherein the communications device (12, 14), the control device (16, 32) and the control circuit (20, 30), are integrated in a common integrated circuit (IC),
**characterized in that**
the switching regulator has a plurality of discrete components which comprise at least one inductor (L), at least one capacitor (C 1 - C3), at least one diode (SD) and at least one resistor (R1. R2); and
**in that** the circuit arrangement (10, 110) has a substrate (40) on which both the integrated circuit (IC) and the discrete components (L; C1 - C3; SD; R1, R2) of the switching regulator are arranged together.

2. A circuit arrangement in accordance with claim 1,
**characterized in that**
the data bus is a LIN bus.

3. A circuit arrangement in accordance with claim 1 or claim 2
**characterized in that**
the circuit arrangement (10, 110) comprises the light emitting diode (LED 1, LED2).

4. A circuit arrangement in accordance with claim 3
**characterized in that**
the circuit arrangement (10, 110) is configured for determining the temperature of the light emitting diode (LED 1, LED2), wherein the control device (16, 32) is furthermore configured for controlling the control circuit (20, 30) on the basis of the temperature of the light emitting diode (LED 1, LED2).

5. A circuit arrangement in accordance with claim 4,
**characterized in that**
the circuit arrangement (10, 110) has a temperature sensor thermally coupled to the light emitting diode (LED 1, LED2),
with the temperature sensor having a Schottky diode (SD) whose forward bias represents the operating temperature of the Schottky diode, and with the Schottky diode being a part of the switching regulator.

6. A circuit arrangement in accordance with any one of the preceding claims,
**characterized in that**
an electronic switch (M1) required for the operation of the switching regulator is integrated in the control circuit (30) or is provided as an external element.

7. A circuit arrangement in accordance with any one of the preceding claims,
**characterized in that**
the switching regulator is a DC converter.

8. A circuit arrangement in accordance with any one of the preceding claims,
**characterized in that**
the substrate (40) is a thin-film substrate.

9. A circuit arrangement in accordance with any one of the preceding claims,
**characterized in that**
the at least one diode of the switching regulator comprises a Schottky diode (SD).

10. A circuit arrangement in accordance with claims 1 or 2,
**characterized in that**
the circuit arrangement (10, 110) comprises the light emitting diode (LED 1, LED2), wherein the circuit arrangement (10, 110) is configured for determining the temperature of the light emitting diode (LED 1, LED2) and the control device (16, 32) is furthermore configured for controlling the control circuit (20, 30) on the basis of the temperature of the light emitting diode (LED 1, LED2), wherein the circuit arrangement (10, 110) has a temperature sensor thermally coupled to the light emitting diode (LED1, LED2), wherein the diode of the switching regulator is a Schottky diode (SD) and simultaneously serves as a temperature sensor whose forward bias represents the operating temperature of the Schottky diode; and **in that** the light emitting diode (LED1, LED2) and also the temperature sensor are arranged on the substrate (40).

11. A circuit arrangement in accordance with any one of the preceding claims,
**characterized in that**
the control device is a microcontroller (16, 32) which is programmable by means of programming signals which are received from the data bus via the communications device (12, 14) in order also to be able to vary operating parameters of the circuit arrangement after an installation of the circuit arrangement into a motor vehicle has taken place.

12. A circuit arrangement in accordance with any one of the preceding claims,
**characterized in that**
the communications device (12, 14) comprises a transceiver (12) which is configured for receiving control signals from the data bus and for transmitting control signals to the data bus.

13. A circuit arrangement in accordance with any one of the preceding claims,
**characterized in that**
the light emitting diode (LED 1, LED2) is integrated into an operation element, in particular into a switch, adjustable between a plurality of operating positions,
**in that** the control signals received by the communications device (12, 14) comprise a position signal which corresponds to the current operating position of the operating element; and
**in that** the control device (16, 32) is furthermore configured for controlling the control circuit (20, 30) on the basis of the position signal.

14. A circuit arrangement in accordance with any one of the preceding claims,
**characterized in that**
the control signals received by the communications device (12, 14) comprise an ambient light signal; and
**in that** the control device (16, 32) is furthermore configured for controlling the control circuit (20, 30) on the basis of the ambient light signal.

15. A circuit arrangement in accordance with any one of the preceding claims,
**characterized in that**
the circuit arrangement (10) has a connector (VB) for an operating voltage, a connector (GND) for a common ground and a connector (LIN) for a LIN signal line of a LIN bus.

## Revendications

1. Agencement de commutation le fonctionnement d'au moins une diode électroluminescente (LED1, LED2), en particulier pour un véhicule automobile, comprenant
un dispositif de communication (12, 14) à relier à un bus de données, qui est conçu au moins pour la réception de signaux de commande venant du bus de données,
un dispositif de commande (16) relié au dispositif de communication (12, 14),
un régleur de commutation, conçu pour préparer un courant de fonctionnement pour le fonctionnement de la diode électroluminescente (LED1, LED2), et
un circuit de pilotage (20, 30) relié au dispositif de commande (16, 32) pour un pilotage cadencé du régleur de commutation,
dans lequel le dispositif de commande (16, 32) est conçu pour piloter le circuit de pilotage (20, 30) en se basant sur les signaux de commande reçus du dispositif de communication (12, 14) ;
dans lequel le dispositif de communication (12, 14), le dispositif de commande (16, 32) et le circuit de pilotage (20, 30) sont intégrés dans un circuit intégré commun (IC),
**caractérisé en ce que**
le régleur de commutation comprend plusieurs composants discrets, qui incluent au moins une inductance (L), au moins une capacité (C1-C3), au moins une diode (SD) et au moins une résistance (R1, R2), et
**en ce que** l'agencement de commutation (10, 110) comprend un substrat (40) sur lequel sont agencés conjointement à la fois le circuit intégré (IC) et les composants discrets (L ; C1-C3 ; SD ; R1, R2) du régleur de commutation.

2. Agencement de commutation selon la revendication 1,
**caractérisé en ce que** le bus de données est un bus de type LIN.

3. Agencement de commutation selon la revendication 1 ou 2, **caractérisé en ce que** l'agencement de commutation (10, 110) inclut les diodes électroluminescentes (LED1, LED2).

4. Agencement de commutation selon la revendication 3,
**caractérisé en ce que** l'agencement de commutation (10, 110) est conçu pour déterminer la température des diodes électroluminescentes (LED1, LED2), et le dispositif de commande (16, 32) est en outre conçu pour le pilotage du circuit de pilotage (20, 30) sur la base de la température des diodes électroluminescentes (LED1, LED2).

5. Agencement de commutation selon la revendication 4,
**caractérisé en ce que** l'agencement de commutation (10, 110) comprend un capteur de température couplé thermiquement avec les diodes électroluminescentes (LED1, LED2), dans lequel le capteur de température comprend une diode de Schottky (SD), dont la tension passante représente la température de service de la diode Schottky et dans lequel la diode Schottky fait partie du régleur de commutation.

6. Agencement de commutation selon l'une des revendications précédentes,
**caractérisé en ce qu'**un commutateur électronique (M1), nécessaire pour le fonctionnement du régleur de commutation, est intégré dans le circuit de pilotage (30) ou prévu sous forme de composant externe.

7. Agencement de commutation selon l'une des revendications précédentes,
**caractérisé en ce que** le régleur de commutation est un convertisseur de tension continue.

8. Agencement de commutation selon l'une des revendications précédentes,
**caractérisé en ce que** le substrat (40) est un substrat en film mince.

9. Agencement de commutation selon l'une des revendications précédentes,
**caractérisé en ce que** ladite au moins une diode du régleur de commutation inclut une diode Schottky (SD).

10. Agencement de commutation selon les revendications 1 ou 2, **caractérisé en ce que** l'agencement de commutation (10, 110) inclut les diodes électroluminescentes (LED1, LED2), dans lequel l'agencement de commutation (10, 110) est conçu pour déterminer la température des diodes électroluminescentes (LED1, LED2) et le dispositif de commande (16, 32) est en outre conçu pour piloter le circuit de pilotage (20, 30) sur la base de la température des diodes électroluminescentes (LED1, LED2), dans lequel l'agencement de commutation (10, 110) comprend un capteur de température couplée thermiquement avec les diodes électroluminescentes (LED1, LED2), dans lequel la diode du régleur de température est une diode Schottky (SD) et sert simultanément de capteur de température, dont la tension passante représente la température de service de la diode Schottky ; et
**en ce que** les diodes électroluminescentes (LED1, LED2) ainsi que le capteur de température sont agencés sur le substrat (40).

11. Agencement de commutation selon l'une des revendications précédentes,
**caractérisé en ce que** le dispositif de commande est un microcontrôleur (16, 32), qui est programmable au moyen de signaux de programmation reçus par le dispositif de communication (12, 14) depuis le bus de données, afin de pouvoir modifier, après intégration de l'agencement de commutation dans un véhicule automobile, les paramètres de service de l'agencement de commutation.

12. Agencement de commutation selon l'une des revendications précédentes,
**caractérisé en ce que** le dispositif de communication (12, 14) inclut un émetteur/récepteur (12), qui est conçu pour la réception et pour l'émission de signaux de commande depuis le bus de données et vers celui-ci.

13. Agencement de commutation selon l'une des revendications précédentes,
**caractérisé**
**en ce que** la diode électroluminescente (LED1, LED2) est intégrée dans un élément de commande réglable entre plusieurs positions de commande, en particulier dans un commutateur,
**en ce que** les signaux de commande reçus par le dispositif de communication (12, 14) incluent un signal de position qui correspond à la position de commande actuelle de l'élément de commande, et
**en ce que** le dispositif de commande (16, 32) est en outre conçu pour piloter le circuit de pilotage (20, 30) sur la base du signal de position.

14. Agencement de commutation selon l'une des revendications précédentes,
**caractérisé**
**en ce que** les signaux de commande reçus par le dispositif de communication (12, 14) inclut un signal de lumière environnante, et
**en ce que** le dispositif de commande (16, 32) est en outre conçu pour piloter le circuit de pilotage (20, 30) sur la base du signal de lumière environnante.

15. Agencement de commutation selon l'une des revendications précédentes,
**caractérisé en ce que** l'agencement de commutation (10) comprend une connexion (VB) pour une tension de fonctionnement, une connexion (GND) pour une masse commune, et une connexion (LIN) pour une ligne de signal LIN d'un bus LIN.
